Europäisches Patentamt

(19) European Patent Office

Office européen des brevets

(11) Numéro de publication: **0 104 112**
A1

## (12) DEMANDE DE BREVET EUROPEEN

(21) Numéro de dépôt: 83401780.8

(22) Date de dépôt: 13.09.83

(51) Int. Cl.³: **E 05 D 1/02**

(30) Priorité: 14.09.82 FR 8215484

(43) Date de publication de la demande:
28.03.84 Bulletin 84/13

(84) Etats contractants désignés:
AT BE CH DE FR GB IT LI LU NL SE

(71) Demandeur: LOUIS VUITTON S.A.
30, rue La Boétie
F-75008 Paris(FR)

(72) Inventeur:
L'inventeur a renonce a sa designation

(74) Mandataire: Rinuy, Guy et al,
Cabinet Rinuy et Santarelli 14, Avenue de la Grande
Armée
F-75017 Paris(FR)

(54) Charnière perfectionnée.

(57) Cette charnière est caractérisée par le fait qu'elle est constituée par une sangle (1) en tout matériau souple de longueur indéfinie et dont les deux lisières (2-3) sont entièrement noyées dans une matière plastique sur une largeur (L) telle que cette matière plastique définisse deux pièces longitudinales (4-5) séparées entre elles par une bande également longitudinale de ladite sangle et de largeur minimale (b) permettant le libre jeu entre les bords desdites pièces.

0104112

1.

"Charnière perfectionnée"

La présente invention concerne une charnière perfectionnée.

On sait que les charnières ou pièces de quincaillerie utilisées pour la ferrure des portes, des fenêtres, des abattants, etc, sont le plus couramment et le plus généralement composées de deux pièces (en un matériau le plus souvent métallique) assemblées sur un axe commun, l'une au moins de ces pièces étant mobile autour de cet axe.

Or, l'inconvénient d'un tel système réside, entre autres, dans la présence même d'un tel axe, toute déformation de ce dernier se traduisant par un défaut d'alignement et, par conséquent, par un fonctionnement défectueux de la charnière. Cet inconvénient est particulièrement sensible dans le cas de charnières de petites dimensions telles que celles utilisées aussi bien en petite menuiserie ou en ébénisterie qu'en maroquinerie. Il est également sensible dans le cas ou l'on réalise des charnières dont ledit axe commun est de grande longueur correspondant par exemple à celle des éléments à assembler de façon articulée. On évite du reste dans ce dernier cas d'utiliser des charnières trop longues et d'une seule portée et l'on adopte la solution qui consiste à procéder à un tel assemblage au moyen de plusieurs charnières dont la longueur des axes représente une fraction de la longueur totale des éléments à assembler.

La présente invention vise par contre une charnière perfectionnée ne comportant pas d'axe commun rigide de liaison et d'articulation de manière, d'une part, à éviter toute contrainte due à un alignement rigoureux et, d'autre part, à pouvoir assembler des éléments et les articuler entre eux sur toute leur longueur.

La charnière selon l'invention est essentiellement caractérisée par le fait qu'elle est constituée par une sangle en tout matériau souple et de longueur indéfinie et dont les deux lisières sont entièrement noyées dans une matière plastique sur une largeur telle que cette matière plastique définisse deux pièces longitudinales, séparées

2.

entre elles par une bande également longitudinale de ladite sangle et de largeur minimale permettant le libre jeu entre les bords desdites pièces.

De façon avantageuse :
- La sangle est en un matériau souple et/ou élastique ;
- Ledit matériau souple et/ou élastique est choisi parmi ceux du type cuirs, simili-cuirs, textiles tissés ou non tissés à fibres naturelles ou synthétiques et dont une partie ou la totalité des fibres peut être élastique et analogues ;
- La matière plastique constituant les deux pièces principales de la charnière est choisie parmi les matières plastiques moulables ou coulables compatibles avec le matériau constitutif de la sangle.

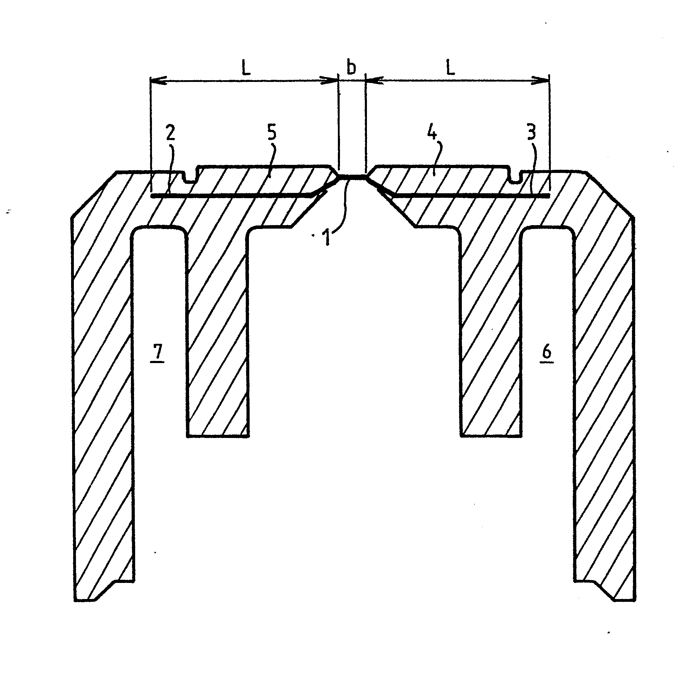

D'autres caractéristiques et avantages de l'invention ressortiront plus clairement de la description qui va suivre faite en regard de la figure unique annexée représentant à titre d'exemple illustratif une vue en élévation et en bout à grande échelle d'une charnière selon l'invention.

En se référant à cette figure, on a représenté en 1 une sangle en tout matériau approprié tel que défini ci-dessus et dont chacune des lisières 2 et 3 est entièrement noyée par moulage,coulage ou extrusion dans une pièce en matière plastique 4-5 sur une largeur "L" telle que l'on ait une bande non noyée de largeur "b" minimale pour permettre le libre jeu des deux pièces 4-5 sans que leurs bords se touchent lors du pivotement de l'une par rapport à l'autre autour d'un axe fictif passant par le milieu de la bande libre de largeur "b".

Bien entendu, les pièces 4 et 5 pourront avoir des formes quelconques et seront munies des dispositifs appropriés pour pouvoir être fixées sur les éléments dont on recherche l'assemblage et l'articulation. Dans le cas particulier illustré par la figure annexée, les pièces à assembler, par exemple deux abattants, sont insérées dans

3.

les gorges 6 et 7.

Ce type de charnière convient particulièrement bien pour des assemblages sur des longueurs quelconques, leur fabrication se faisant de façon très aisée à partir de sangles de longueur indéfinie dont les lisières sont noyées dans de la matière plastique comme on l'a vu ci-dessus, par simple coulage, moulage ou extrusion.

L'utilisation de telles charnières ne présente aucune difficulté car il suffit par un découpage, par tout moyen connu de l'art, de disposer de la longueur de charnière voulue et de la fixer, également par tout moyen connu, sur les éléments à assembler. Ceci est valable quel que soit le domaine d'utilisation, tel que celui de la menuiserie, de l'ébénisterie, de la maroquinerie, dans la fabrication des valises, des bagages, des sacs, etc.

De par la conception même d'une charnière selon l'invention, on réalise qu'elle ne peut présenter de défectuosités de fonctionnement analogues à celles dues par exemple à un "coincement" résultant d'une déformation éventuellement de l'axe commun d'une charnière de type classique ou d'un défaut d'alignement. Seule l'usure de la sangle ou la destruction totale des éléments en matière plastique objets de l'invention pourrait être cause de défectuosité. Aussi ces pièces sont choisies de préférence suffisamment résistantes et robustes pour éviter un tel incident.

Il va du reste de soi que la présente invention n'a été décrite qu'à titre purement explicatif et nullement limitatif et que toute modification utile pourra y être apportée sans sortir de son cadre.

4.

REVENDICATIONS

1. Charnière perfectionnée ne comportant pas d'axe commun rigide de liaison et d'articulation entre ses deux pièces constitutives mobiles, charnière essentiellement caractérisée par le fait qu'elle est constituée par une sangle (1) en tout matériau souple de longueur indéfinie et dont les deux lisières (2-3) sont entièrement noyées dans une matière plastique sur une largeur (L) telle que cette matière plastique définisse deux pièces longitudinales (4-5) séparées entre elles par une bande également longitudinale de ladite sangle et de largeur minimale (b) permettant le libre jeu entre les bords desdites pièces.

2. Charnière selon la revendication 1, caractérisée par le fait que la sangle est en un matériau souple et/ou élastique.

3. Charnière selon la revendication 1 ou 2, caractérisée par le fait que ledit matériau souple et/ou élastique est choisi parmi ceux du type cuirs, simili-cuirs, textiles tissés ou non tissés à fibres naturelles ou synthétiques et dont une partie ou la totalité des fibres peut être élastique,et analogues.

4. Charnière selon l'une quelconque des revendications 1 à 3, caractérisée par le fait que la matière plastique constituant les deux pièces principales de la charnière est choisie parmi les matières plastiques moulables, coulables ou extrudables compatibles avec le matériau constitutif de la sangle.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 808 754 (BOTTJER) <br> * Colonne 6, lignes 35-49; figure 10 * | 1,2,4 | E 05 D 1/02 |
| Y | FR-A-2 078 613 (BURELLI) <br> * Page 1, lignes 29-37; page 2, lignes 30-32; page 3, lignes 3,4; figure 1 * | 1,2 | |
| Y | FR-E- 94 513 (ETHYLENE PLASTIQUE) <br> * Page 2, exemples 2,3; figures 1-5 * | 1,2,4 | |
| A | FR-A-2 271 524 (LAMMLE) <br> * Page 8, lignes 4-33; figure 4 * | 1,2,4 | |
| A | DE-A-2 901 371 (WALMè-BADEéFEN CHRISTIAN WALBUM) <br> * Page 32, alin.a 3; figure 2 * | 1 | DOMAINES TECHNIQUES RECHERCHES (Int. Cl. ³) <br><br> E 05 D |
| A | DE-A-2 309 567 (WAKEMAN) <br> * Page 6, alin'a 2; figure 1 * | 1,3 | |
| P,A | FR-A-2 503 230 (BLANC) <br> * Page 4, lignes 2-13; figure 1 * | 1,2 | |
| P,A | DE-A-3 116 146 (HèPPE) <br> * Page 6, dernier alin'a; figures 1,2 * | 1,2,3 | |

-----

Le présent rapport de recherche a été établi pour toutes les revendications

| Lieu de la recherche <br> LA HAYE | Date d'achèvement de la recherche <br> 30-11-1983 | Examinateur <br> NEYS B.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82